# EUROPÄISCHE PATENTSCHRIFT

(11) **EP 0 932 997 B1**
(45) Veröffentlichungstag und Bekanntmachung des Hinweises auf die Patenterteilung: **10.09.2003**
(21) Anmeldenummer: 97913097.8
(22) Anmeldetag: 10.10.1997
(51) Int. Cl.: H04Q 7/38, H04Q 7/24

(54) **VERFAHREN ZUM ZUGREIFEN VON MOBILEN KOMMUNIKATIONSENDGERÄTEN AUF ÖFFENTLICHE, PRIVATE BZW. HEIM-KOMMUNIKATIONSBEREICHE**
MOBILE PHONE ACCESS METHOD FOR PUBLIC, PRIVATE OR HOME COMMUNICATION AREAS
PROCEDE POUR L'ACCES DE TERMINAUX DE TELECOMMUNICATIONS MOBILES A DES SECTEURS DE TELECOMMUNICATIONS PUBLICS, PRIVES OU LOCAUX

(30) Priorität: 18.10.1996 DE 19643186
(43) Veröffentlichungstag der Anmeldung: 04.08.1999
(73) Patentinhaber: SIEMENS AKTIENGESELLSCHAFT, 80333 München (DE)
(72) Erfinder: MORPER, Hans-Jochen, D-85253 Erdweg (DE); RUCKSTUHL, Hans-Peter, D-80804 München (DE)
(86) Internationale Anmeldenummer: DE9702325
(87) Internationale Veröffentlichungsnummer: WO98018279

(56) Entgegenhaltungen:
- EP-A- 0 724 371
- WO-A-97/09835

## Beschreibung

In zukünftigen Kommunikationsnetzen werden mobile bzw. drahtlose Kommunkationsendgeräte direkt an Kommunikationssysteme oder über Zubringereinrichtungen an Kommunikationssysteme drahtlos angeschlossen. Die Zubringereinrichtungen und die Kommunikationssysteme können hierbei unterschiedlichsten Betreibern zugeordnet sein. Betreiber - in der Fachwelt als Operator bekannt - sind beispielsweise öffentliche Betreiber - z.B. Deutsche Bundespost - oder Betreiber von Privatnetzen - z.B. Firmennetze - und private Betreiber von Kommunikationssystemen im Heim- bzw. Wohnbereich. Die jeweiligen Betreiber betreiben folglich einen öffentlichen Bereich - beispielsweise ein öffentliches Kommunikationsnetz -, einen privaten Bereich - beispielsweise ein privates Kommunikationsnetz, und einen Heim-Bereich. Ein mobiles Kommunikationsendgerät kann Zugriff zu einem oder mehreren Betreibern bzw. Bereichen besitzen, wozu dieses in den betreffenden Bereichen subscripiert bzw. angemeldet ist.

Des weiteren sind für eine Identifikation der jeweiligen Bereiche bzw. Basisstationen in den jeweiligen Bereichen bereichsspezifische Identifikationen vorgesehen, die in den Funkbereichen der Basisstationen der jeweiligen Bereiche verbreitet, d.h. rundgesendet werden. Gemäß beispielsweise dem DECT- Standard (Digital Enhanced Cordless Telecommunications) wird hierzu eine Identifikation periodisch ausgesandt. In beispielsweise aktuell aktivierten, d.h. aktuell eingeschalteten oder 'roamenden', d.h. den Funkbereich wechselnden, mobilen Kommunikationsendgeräten wird nach Empfang einer Radio Fixed Part Identity - Meldung die übermittelte Identifikation mit einer gespeicherten Identifikation verglichen, wobei eine gespeicherte Identifikation - beispielsweise gemäß dem DECT-Standard PARK,PLI - anzeigt, daß das jeweilige Kommunikationsendgerät auf den Bereich bzw. Basisstation zugreifen darf. Ist eine entsprechende Identifikation gespeichert, wird diese zugehörige, dem Kommunikationsendgerät eindeutig zugeordnete Identifikation IPUI (International Portable User Identity) in eine Location Registration - Meldung eingefügt und an die Basisstation bzw. den jeweiligen Bereich gesendet, und die Zugriffsberechtigung wird über die PARK/PLI (Portable Access Right Key, Park Lenght Indicator) bestimmt. Durch diese Location Registration - Meldung wird das betroffene Kommunkationsendgerät in dem Bereich bzw. deren Basisstationen angemeldet. Im jeweiligen Bereich wird überprüft, ob die empfangene Identifikation in dem jeweiligen Bereich zugelassen ist.

In einem Kommunikationsendgerät können mehrere Identifikationen gespeichert werden, mit deren Hilfe das Kommunkationsendgerät für Zugriffe zu mehreren, unterschiedlichen Bereichen bzw. Kommunikationsnetzen berechtigt ist. Bei einem Wechsel der Bereiche bzw. bei gleichzeitig möglichen Zugriffen zu mehreren Bereichen - beispielsweise bei einem Wechsel von einem öffentlichen in einen Heim-Bereich und einem möglichen Zugriff zu dem Heim - und öffentlichen Bereich - greift das Kommunikationsendgerät weiterhin auf den öffentlichen Bereich zu, obwohl der Zugriff zu dem Heim-Bereich vorteilhafter bzw. gebührengünstiger ist.

Des weiteren ist in der EP-A-0 724 371 ein "Dual-Mode-Handy" beschrieben, das auf drei unterschiedliche Kommunikationsnetze mit unterschiedlichen Übertragungsverfahren zugreifen kann. Die drei Kommunikationsnetze stellen das GSM-Netz, das DCS 1800-Netz und das DECT-Netz dar, wobei eine der möglichen Betriebsarten priorisiert und vorrangig eingestellt werden kann.

Die der Erfindung zugrundeliegende Aufgabe besteht darin, die Zugriffsteuerung bei möglichen Zugriffen auf unterschiedliche Bereiche zu verbessern. Die Aufgabe wird durch die Merkmale des Anspruchs 1 gelöst.

Der wesentliche Aspekt des erfindungsgemäßen Verfahrens ist darin zu sehen, daß im mobilen Kommunikationsendgerät Identifikationen derjenigen Bereiche gespeichert sind, für die das mobile Kommunikationsendgerät subscripiert ist und den gespeicherten Identifikationen Prioritäten zuordenbar sind.
Bei möglichen Zugriffen auf unterschiedliche Bereiche greift das mobile Kommunikationsendgerät auf den Bereich zu, deren gespeicherte Identifikation die höchste Priorität zugeordnet ist. Bei einem aktuellen Zugriff des Kommunikationsendgerätes auf einen Bereich greift bei einem Eintritt in einen unterschiedlichen Bereich, dessen Identifikation eine höhere Priorität zugeordnet ist, das Kommunikationsendgerät auf den unterschiedlichen Bereich zu - Anspruch 2. Durch den priorisierten Zugriff auf einen der unterschiedlichen Bereiche, insbesondere den Heim-Bereich, wird beim Eintreten in den priorisierten Bereich der aktuelle Zugriff auf einen Bereich bzw. ein Kommunikationsnetz beendet und auf den priorisierten Bereich zugegriffen. Diese automatische Steuerung des Zugriffs von einem aktuellen auf einen priorisierten Bereich bei einem Eintreten in den priorisierten Bereich ist insbesondere beim Eintreten in den Heim-Bereich vorteilhaft, da hierbei ggfs. gebührengünstigere Verbindungen aufgebaut werden können. Greift das Kommunikationsendgerät aktuell auf keinen Bereich zu, wird bei einer Aktivierung des Kommunikationsendgerätes automatisch auf den priorisierten Bereich zugegriffen, sofern eine Identifikation von diesem Bereich empfangen wird.

Gemäß einer vorteilhaften Ausgestaltung des erfindungsgemäßen Verfahren wird bei einem Zugriff auf den unterschiedlichen Bereich eine Trenn-Meldung (Detach) an den aktuellen Bereich gesendet - Anspruch 3. Durch die Trenn-Meldung wird das mobile Kommunkationsendgerät in dem Bereich abgemeldet, auf das es aktuell nicht mehr zugreifen will. Hierdurch werden belegte vermittlungstechnische Ressourcen in den jeweiligen Bereichen frühzeitig freigegeben.

Vorteilhaft ist der öffentliche Bereich durch ein öffentliches Kommunikationsnetz und/oder ein öffentliches Mobilfunknetz, der private Bereich durch ein privates Kommunikationsnetz und der Heim-Bereich durch eine Heim- Kommunikationssystem realisiert - Anspruch 5.

Weitere vorteilhafte Ausgestaltungen des erfindungsgemäßen Verfahrens sind den weiteren Ansprüchen zu entnehmen.

Im folgenden wird das erfindungsgemäße Verfahren anhand eines Blockschaltbildes näher erläutert.

Das Blockschaltbild zeigt zwei Bereiche BH, BP, wobei ein Heim-Bereich BH eine private Basisstation (BS-H) und der weitere öffentliche Bereich BP ein öffenltiches Kommunikationsnetz (KN) darstellt. Im Heim-Bereich BH ist eine Basisstation BS-H und im öffentlichen Bereich BP sind mehrere Basisstationen BS angeordnet, wobei die im öffentlichen Kommunikationsnetz KN angeordneten Basisstationen BS über ein Zubringernetz ACCESS an ein öffentliches Kommunikationssystem LE und die Basisstation BS-H des Heim-Bereichs BH an beispielsweise dasselbe öffentliche Kommunikationssystem LE angeschlossen sind. Die Wirkungsbereiche der beiden Bereiche BH,BP sind durch strichlierte Kreise angedeutet, wobei die strichlierten Kreise jeweils die Summe aller Funkbereiche FB(h,p) umfaßt. An die Basisstationen BS,BS-H sind jeweils drahtlos mobile Kommunikationsendgeräte KE angeschlossen. Für das Ausführungsbeispiels sei angenommen, daß der drahtlose Anschluß gemäß dem DECT-Standard realisiert ist. Im Zubringernetz ACCESS können die Basisstationen BS und die Kommunikationsendgeräte KE alternativ durch einen CAP-Standard (CTM (Cord-less Terminal Mobility) Access Profile) realisiert werden.

Gemäß dem DECT-Standard senden die Basisstationen BS,BS-H der beiden Bereiche periodisch eine Meldung RFPI aus, die eine Identifikation (ID) enthält. Diese Identifikation ID(h,p) umfaßt eine Bereichsinformation über die Zugehörigkeit der jeweiligen Basisstation BS,BS-H zu einem der Bereiche BH,BP, eine Information über den Betreiber des jeweiligen Bereiches - beispielsweise des öffentlichen Bereichs BP bzw. öffentlichen Kommunikationsnetzes KN.

In den Kommunikationsendgeräten KE der jeweiligen Bereiche BH,BP sind jeweils Subscriptions-Daten gespeichert, für deren Bereiche BH,BP diese Kommunkationsendgeräte KE subscripiert bzw. angemeldet sind. In den Subscriptions-Daten sind DECT-spezifische Identifikationen ID (h,p) gespeichert. Dies bedeutet, daß die Kommunikationsendgeräte KE bei einem Zugriff auf den zugeordneten Bereich BH,BP die Identifikation ID(h,p) senden und in den Basisstationen BS überprüft wird, ob ein Kommunikationsendgeräte KE mit der übermittelten Identifikation ID(h,p) des eigenen Bereichs BH,BP zugreift.

Darüberhinaus ist in zukünftigen Kommunikationsnetzen vorgesehen, daß von den jeweiligen Kommunikationsendgeräten KE nicht nur Zugriffe auf den Bereich BH,BP, in dem diese subscripiert sind, sondern auch auf andere Bereiche BH, BP zugelassen werden. Hierzu sind in den Kommunikationsendgeräten KE diejenigen Identifikationen ID(h,p) gespeichert, zu deren zugeordnetem Bereich BH,BP das jeweilige Kommunikationsendgerät KE zugreifen darf. Erfindungsgemäß sind den gespeicherten Identifikationen ID(h,p) Prioritäten p zugeordnet. Beim im Ausführungsbeispiel dargestellten Kommunikationsendgerät KE' ist der Identifikation ID(h) für den Heim-Bereich BH eine erste Priorität p1 und der Identifikation ID(p) für den öffentlichen Bereich BP eine zweite Priorität p2 zugeordnet. Dies bedeutet, daß dieses Kommunkationsendgerät KE' sowohl zum Heim- als auch zum öffentlichen Bereich BH,BP zugreifen darf, jedoch, sofern ein Zugriff auf den Heim-Bereich HB möglich ist priorisiert auf den Heim-Bereich HB zugreift.

Greift beispielsweise das Kommunikationsendgerät KE' aktuell auf den öffentlichen Bereich BP zu und wechselt hierbei in den Heim-Bereich BH, so wird aufgrund der priorisierten, gespeicherten Identifikation ID(h) des Heim-Bereichs BH der Zugriff zum öffentlichen Bereich BP beendet und ein Zugriff in den Heim-Bereich BH durchgeführt - im Blockschaltbild durch mit ZH und ZP bezeichnete Linien angedeutet. Das Beenden des Zugriffs wird erfindungsgemäß durch eine DECT-gemäße Detach-Meldung bzw. Trenn-Meldung tm bewirkt. Ein Zugriff bedeutet insbesondere eine Registrierung des jeweiligen Kommunikationsendgerätes KE im jeweiligen Bereich BH,BP, wodurch die jeweiligen, kommunikationsendgeräte-spezifischen Service Profiles in den Basisstationen BS,BS-H verfügbar sind. Zugriffe auf die jeweiligen Bereiche finden bei einem Wechsel des Bereichs BH,BP und einer Aktivierung des Kommunikationsendgerätes KE - beispielsweise Kommunikationsendgerät KE einschalten - statt. Im Rahmen der Zugriffe können Verbindungen zu weiteren mobilen Kommunikationsendgeräten KE oder Kommunikationsendgeräten KE der Bereiche BH,BP aufgebaut werden.

Die Identifikationen ID (h,p) enthalten DECT-spezifische Identifikationen (PARK,ARI) bezüglich der Zugriffsrechte und teilnehmerspezifische Identifikationen (IPUI). Entsprechend dem DECT-Standard ist die teilnehmerspezifische Identifikation (IPUI) bei den Zugriffen zu den jeweiligen Bereichen HB,HP in die zu sendenden Meldungen einzufügen. Ein nicht dargestellter, jedoch möglicher Bereich ist beispielsweise ein privater Bereich - beispielsweise im Bereich einer PABX.

Durch den erfindungsgemäßen priorisierten Zugriff auf einen priorisierten Bereich - insbesondere den Heim-Bereich HB - greift ein aktiviertes Kommunikationsendgerät KE priorisiert auf den priorisierten Bereich HB zu, sofern dies möglich ist. Bei einem Wechsel in den Heim-Bereich HB wird automatisch der aktuelle Zugriff auf einen Bereich - beispielsweise den öffentlichen oder privaten Bereich BP - beendet und ein Zugriff auf den priorisierten Heim-Bereich veranlaßt. Hierdurch wird sichergestellt, daß, sofern möglich, ein Zugriff auf den gebührengünstigen Heim-Bereich HB veranlaßt wird.

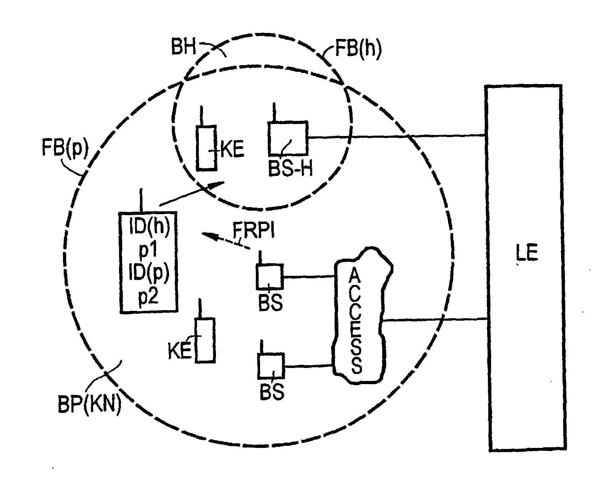

## Patentansprüche

1. Verfahren zum Zugreifen von mobilen Kommunikationsendgeräten (KE) auf öffentliche, private bzw. Heim-Bereiche (BP,BP), an deren Basisstationen (BS(p,p)) die mobilen Kommunikationsendgeräte (KE) mit einem einheitlichen Übertragungsverfahren anschließbar sind,
- bei dem im mobilen Kommunikationsendgerät (KE) Identifikationen (ID(h,p)) derjenigen Bereiche (BH,BP) gespeichert sind, für die das mobile Kommunikationsendgerät (KE) subscripiert ist,
- bei dem im mobilen Kommunikationsendgerät (KE) den gespeicherten Identifikationen (ID(h,p)) Prioritäten (p1,2) zuordenbar sind,
- bei dem bei möglichen Zugriffen auf unterschiedliche Bereiche (BH,BP) das mobile Kommunikationsendgerät (KE) auf den Bereich (BH) zugreift, deren gespeicherte Identifikation (ID(h) die höchste Priorität (p1) zugeordnet ist.

2. Verfahren nach Anspruch 1, **dadurch gekennzeichnet, daß** bei einem aktuellen Zugriff des Kommunikationsendgerätes (KE) auf einen Bereich (BP) bei einem Eintritt in einen unterschiedlichen Bereich (BH), dessen Identifikation (ID(h)) eine höhere Priorität (p1) zugeordnet ist, das Kommunikationsendgerät (KE) auf den unterschiedlichen Bereich (BH) zugreift.

3. Verfahren nach Anspruch 2, **dadurch gekennzeichnet, daß** bei einem Zugriff auf den unterschiedlichen Bereich (BH) eine Trenn-Meldung (Detach) an den aktuellen Bereich (BP) gesendet wird.

4. Verfahren nach Anspruch 3, **dadurch gekennzeichnet, daß** in der Trenn-Meldung (Detach) die Identifikation (RFPI (PARK/PLI)) der Basisstation (BS) des neuen Bereichs (BH) enthalten ist.

5. Verfahren nach einem der Ansprüche 1 bis 4, **dadurch gekennzeichnet, daß** der öffentliche Bereich (BP) durch ein öffentliches Kommunikationsnetz (KN(P)) und/oder ein öffentliches Mobilfunknetz, der private Bereich (BD) durch ein privates Kommunikationsnetz (KN(d) und der Heim-Bereich (BH) durch eine Basisstation (BS-H) realisiert ist.

6. Verfahren nach einem der Ansprüche 1 bis 5, **dadurch gekennzeichnet, daß** die Kommunikationsendgeräte (KE) gemäß dem DECT-orientierten Standard oder einem CDMA-orientierten Verfahren drahtlos an die jeweiligen Basisstationen (BS,BS-H) angeschlossen sind.

## Claims

1. Method for mobile communication terminals (KE) to access public, private or home areas (BP,BP) to whose base stations (BS(p,p)) the mobile communication terminals (KE) can be connected using a standard transmission method,
- in which the mobile communication terminal (KE) stores identifications (ID(h,p)) for those areas (BH,BP) to which the mobile communication terminal (KE) is subscribed,
- in which the stored identifications (ID(h,p)) in the mobile communication terminal (KE) can be assigned priorities (p1,2),
- in which, when it is possible to access different areas (BH,BP), the mobile communication terminal (KE) accesses the area (BH) whose stored identification (ID(h)) has the highest assigned priority (pl).

2. Method according to Claim 1, **characterized in that**, when the communication terminal (KE) is currently accessing an area (BP) upon entry into a different area (BH) whose identification (ID(h)) has a higher assigned priority (pl), the communication terminal (KE) accesses the different area (BH).

3. Method according to Claim 2, **characterized in that** access to the different area (BH) involves a detach message (Detach) being sent to the current area (BP).

4. Method according to Claim 3, **characterized in that** the detach message (Detach) contains the identification (RFPI(PARK/PLI)) for the base station (BS) for the new area (BH).

5. Method according to one of Claims 1 to 4, **characterized in that** the public area (BP) is provided by a public communication network (KN(P)) and/or a public mobile radio network, the private area (BD) is provided by a private communication network (KN(d), and the home area (BH) is provided by a base station (BS-H).

6. Method according to one of Claims 1 to 5, **characterized in that** the communication terminals (KE) are wirelessly connected to the respective base stations (BS,BS-H) on the basis of the DECT-oriented standard or a CDMA-oriented method.

## Revendications

1. Procédé pour l'accès de terminaux de télécommunications mobiles (KE) à des secteurs de télécommunications publics, privés ou locaux (BP, BP), aux stations de base desquels (BS (p, p)) les terminaux de télécommunications mobiles (KE) sont connectables au moyen d'un procédé de transmission uniforme,
- dans lequel des identifications (ID (h, p)) des secteurs (BH, BP) sont mémorisées dans le terminal de télécommunications mobile (KE), pour lesquels le terminal de télécommunication (KE) est inscrit,
- dans lequel des priorités (p1, 2) sont attribuables aux identifications (ID (h, p)) mémorisées dans le terminal de télécommunications mobile (KE),
- dans lequel, en cas d'accès possibles à différents secteurs (BH, BP), le terminal de télécommunications (KE) a accès au secteur, à l'identification mémorisée (ID (h)) duquel est attribuée la priorité la plus haute (p1).

2. Procédé selon la revendication 1, **caractérisé en ce qu'**en cas d'un accès actuel du terminal de télécommunications (KE) à un secteur (BP), le terminal de télécommunications (KE), lors de l'entrée dans un secteur différent (BH), à l'identification (ID (h)) duquel une priorité plus haute (p1) est attribuée, a accès au secteur différent (BH).

3. Procédé selon la revendication 2, **caractérisé en ce qu'**en cas d'accès au secteur différant (BH), un message de séparation (Detach) est émis au secteur actuel (BP).

4. Procédé selon la revendication 3, **caractérisé en ce que** l'identification (RFPI (PARK/PLI)) de la station de base (BS) du nouveau secteur (BH) est contenue dans le message de séparation (Detach).

5. Procédé selon l'une quelconque des revendications 1 à 4, **caractérisé en ce que** le secteur public (BP) est réalisé par un réseau de télécommunications public (KN (P)) et/ou un réseau de radiocommunication mobile, le secteur privé (BD) est réalisé par un réseau de télécommunications privé (KN (d) et le secteur local (BH) est réalisé par une station de base (BS-H).

6. Procédé selon l'une quelconque des revendications 1 à 5, **caractérisé en ce que** les terminaux de télécommunications (KE) sont connectés aux stations de base respectives (BS, BS-H) selon la norme orientée DECT ou un procédé sans fil orienté CDMA.
